# FASCICULE DE BREVET EUROPEEN

(11) **EP 1 049 348 B1**
(45) Date de publication et mention de la délivrance du brevet: **09.02.2005**
(21) Numéro de dépôt: 00460024.3
(22) Date de dépôt: 23.03.2000
(51) Int. Cl.: H04Q 7/38

(54) **Procédé de mise à disposition d'une sélection de services pour un utilisateur d'un terminal, terminal et centre de gestion correspondants**
Verfahren zum Bereitstellen von Diensteselektion für ein Endgerät, Endgerät und Entsprechendes Verwaltungszentrum
Method for providing a services selection for a user terminal, terminal and corresponding management centre

(30) Priorité: 26.04.1999 FR 9905483
(43) Date de publication de la demande: 02.11.2000
(73) Titulaire: Société Française du Radiotéléphone-SFR, 75008 Paris (FR)
(72) Inventeur: Vassiliou, Marie-Michèle, 75007 Paris (FR)
(74) Mandataire: Vidon, Patrice

(56) Documents cités:
- WO-A-97/41654
- FR-A- 2 711 033

## Description

Le domaine de l'invention est celui des télécommunications, notamment des radiocommunications.

Par télécommunications, on entend ici tous types de communications véhiculant du son et/ou des images et/ou des données. Par ailleurs, les terminaux entre lesquels ces communications sont établies peuvent être mis en oeuvre dans un même réseau ou dans différents réseaux quelconque(s).

La présente invention s'applique préférentiellement à un terminal du type radiotéléphone. Un tel radiotéléphone est par exemple compatible avec un système de radiocommunication de type GSM (pour "Global System for Mobile communications" en anglais), DCS 1800 (pour "Digital Cellular System 1800 MHz" en anglais), PCS 1900 (pour "Personal Communication System" en anglais), DECT (pour "Digital European Cordless Telecommunications" en anglais), ou encore UMTS (pour "Universal Mobile Telecommunication System" en anglais).

Il est clair cependant que le terminal de l'invention n'est pas obligatoirement un radiotéléphone. Il peut également s'agir d'un poste téléphonique classique, mis en oeuvre dans un réseau téléphonique fixe (par exemple un réseau téléphonique commuté (RTC) ou un réseau numérique à intégration de services (RNIS)) ou encore un terminal informatique, mis en oeuvre dans un réseau informatique (par exemple un réseau de type Internet).

Plus précisément, l'invention concerne la mise à disposition d'une sélection de services pour un utilisateur d'un terminal. On suppose donc ici que le terminal est du type comprenant des moyens d'accès à des services prédéterminés. Parmi les services classiquement accessibles à l'usager, on peut citer, uniquement à titre d'exemple, les services de réservation (hôtel, avion, train, spectacles, ...).

On considère maintenant plus précisément, sans que cela soit limitatif, le cas du radiotéléphone.

L'opérateur du réseau de radiocommunication met à la disposition de ses abonnés, munis chacun d'un radiotéléphone, une pluralité de services. Chaque service est classiquement associé à un numéro d'appel et un identifiant. Le numéro d'appel d'un service donné est généralement le numéro de téléphone des moyens distants (serveurs, répondeurs, standards téléphoniques classiques, etc) qui offrent ce service donné. Quant aux identifiants de services, il s'agit généralement des noms abrégés donnés à ces services (tels que par exemple "réservation hôtel", "réservation cinéma", ...). Les moyens d'accès aux services, compris dans le terminal, sont typiquement organisés sous la forme d'une table stockant les numéros d'appel et les identifiants correspondants. L'usager peut visualiser le contenu de cette table sur l'écran de son terminal, par exemple sous la forme d'un menu comportant une pluralité d'items (c'est-à-dire d'options susceptibles d'être activées sélectivement) correspondant aux différents services proposés.

Actuellement, chaque opérateur dispose d'une pluralité de services, qu'il met à la disposition de ses abonnés, gratuitement ou de façon payante. Parfois, certains des services proposés par l'opérateur sont en fait sous-traités à des offreurs de services tiers ayant passé un contrat avec l'opérateur. Typiquement, c'est l'utilisateur qui choisit les services auxquels il souhaite pouvoir accéder. L'utilisateur effectue généralement ce choix lorsqu'il prend son abonnement. A ce moment, plusieurs types d'abonnement lui sont par exemple proposés, associés chacun à une sélection particulière de services. Par ailleurs, et quel que soit l'abonnement retenu, l'opérateur offre habituellement à l'utilisateur la possibilité de modifier sa sélection de services, soit en changeant d'abonnement (et donc en passant à une autre sélection particulière de services), soit en modifiant directement la sélection particulière associée à son abonnement courant.

La technique actuelle, telle que décrite ci-dessus, de mise à disposition d'une sélection de services pour un utilisateur présente l'inconvénient majeur d'être relativement figée. En d'autres termes, la sélection de services proposée à un utilisateur n'est pas la sélection répondant de façon optimale aux besoins de celui-ci. Ceci se traduit par une mauvaise utilisation des services, ce qui est dommageable tant pour l'utilisateur que pour l'opérateur.

En effet, la sélection de services que l'utilisateur choisit au départ est celle qui lui paraît la mieux adaptée à ses besoins. Or, lorsque ses besoins évoluent (ce qui est fréquent) ou bien si l'appréciation initiale de ses besoins n'est pas correcte, il est rare dans la pratique que l'utilisateur engage les démarches nécessaires auprès de son opérateur en vue de modifier sa sélection de services. Ce qui se traduit évidemment par une inadéquation entre les besoins réels de l'utilisateur et les services auxquels il a accès.

Quand bien même l'utilisateur engage parfois des démarches de modification, il est clair que la fréquence de celles-ci ne constituent qu'un pis-aller, ne lui permettant pas d'avoir une sélection de services adaptée en permanence à ses besoins.

En outre, l'utilisateur n'a généralement pas une bonne connaissance globale des services existants, et notamment des nouveaux services (devenus accessibles alors qu'il était déjà abonné). Le choix qu'il effectue parmi les services existants est donc biaisé.

Par ailleurs, afin de satisfaire un nombre maximal d'utilisateurs, l'opérateur se voit le plus souvent contraint d'offrir des services ayant un caractère générique, ce qui les rend en contrepartie moins performants. En d'autres termes, les services actuellement proposés englobent une multitude de cas possibles, ce qui les rend complexes et limite leur utilisation. Par exemple, un opérateur offre généralement un service de réservation d'hôtels couvrant une vaste zone géographique (par exemple le territoire français) et proposant donc à l'utilisateur non seulement des hôtels situés à proximité mais aussi des hôtels trop éloignés pour pouvoir être effectivement choisis par l'utilisateur. L'utilisateur rencontre donc parfois des difficultés pour effectuer rapidement une réservation d'hôtel.

Inversement, l'opérateur offre parfois des services ayant un caractère plus spécifique, de façon à être plus performants. Malheureusement, on se retrouve alors dans la situation déjà décrite ci-dessus, où le service devient généralement inadapté dès que les besoins de l'utilisateur changent. En reprenant l'exemple précité, le service de réservation d'hôtels couvre dans ce cas une zone géographique restreinte (par exemple une ville et ses environs), de façon que l'utilisateur puisse effectuer un choix rapide, uniquement parmi les hôtels proches. Mais dès que l'utilisateur quitte cette zone géographique restreinte, il ne peut plus utiliser ce service. Il conviendrait dans ce cas d'augmenter le nombre de services spécifiques, mais se pose alors la question du choix de l'un de ces différents services par l'utilisateur, sous réserve en outre que celui-ci y ait accès.

Le document D1 (la demande internationale WO 97/41654) concerne une méthode et un système pour disséminer de l'information vers des abonnés d'un réseau de télécommunications mobiles à partir d'au moins une information source contenant des données qui sont mises à jour continuellement ou par intervalles. Le système inclut un centre de distribution de messages à connecter à au moins une source d'informations et adapté à traiter les données permettant la génération de messages pour un client donné, en correspondance avec le profil du client. Les messages d'informations sont transmis vers le terminal du client sous la forme de messages courts. Ces messages d'informations peuvent être transmis à des moments précis ou lors de l'occurrence d'évènements prédéterminés et peuvent dépendre de la localisation du client. Un client particulier peut aussi demander une information à la source d'informations à tout moment, de n'importe quel lieu ou lors de l'occurrence d'un événement et recevoir l'information ainsi que les messages mentionnés ci-avant dans un menu. Le document D1 décrit notamment la fourniture d'informations par des services auxquels un abonné aura au préalable souscrit en fonction de son profil.

L'invention a notamment pour objectif de pallier ces différents inconvénients de l'état de la technique.

Plus précisément, l'un des objectifs de la présente invention est de fournir un procédé permettant de mettre à la disposition d'un utilisateur d'un terminal une sélection de services adaptée en permanence aux besoins de cet utilisateur.

L'invention a également pour objectif de fournir un tel procédé qui permette d'augmenter les performances des services proposés aux utilisateurs.

Un autre objectif de l'invention est de fournir un tel procédé qui permette aux utilisateurs d'utiliser plus simplement et plus fréquemment les différents services proposés par l'opérateur.

Un objectif complémentaire de l'invention est de fournir un tel procédé qui permette d'augmenter le nombre de services proposés à l'utilisateur, ainsi que la création de nouveaux types de services, venant élargir la gamme de services offerts par l'opérateur.

Ces différents objectifs, ainsi que d'autres qui apparaîtront par la suite, sont atteints selon l'invention à l'aide d'un procédé selon la revendication 1.

La présente invention propose donc une solution doublement originale pour effectuer la mise à jour de la sélection de services propre à chaque utilisateur. En effet, d'une part, cette mise à jour est confiée à l'opérateur, et non pas à l'utilisateur. Elle peut donc être effectuée de façon automatique et présenter un caractère dynamique. D'autre part, cette mise à jour est fonction du comportement de l'utilisateur. En d'autres termes, la liste des services dont dispose réellement l'utilisateur n'est pas figée mais évolue en fonction de son profil, c'est-à-dire de ses besoins (connus et/ou supposés).

Par services, on entend non seulement les services que l'utilisateur doit appeler, mais aussi ceux qui appellent automatiquement l'utilisateur. La première catégorie (services appelés) peut comprendre des services relativement classiques, tels que par exemple des services de réservation. La seconde catégorie (services appelants) peut comprendre des services nouvellement créés, tels que par exemple des services d'envoi de messages (voix, données, ...) dont le contenu est fonction du comportement de l'utilisateur. Un message contient par exemple la liste des stations essence les plus proches, ou encore avertit l'utilisateur de l'incorporation au sein de sa sélection de services d'un nouveau service de réservation d'hôtels, spécifique à la zone géographique dans laquelle il vient de pénétrer.

De façon avantageuse, lesdites informations représentatives du comportement comprennent au moins une information correspondant à une localisation géographique dudit utilisateur.

Ainsi, la mise à jour de la sélection de services peut consister à ne retenir que certains services, parmi une pluralité des services liés (directement ou indirectement) chacun à une zone géographique prédéterminée restreinte. On rappelle que de tels services, liés à des zones géographiques restreintes, présentent de meilleures performances (notamment en temps de réponse). Par ailleurs, du fait que c'est l'opérateur qui effectue automatiquement la sélection, le nombre de ces services peut être très élevé, sans risque que certains d'entre eux ne soient pas ou peu sélectionnés.

Préférentiellement, ledit terminal permet l'accès d'une part à des services de type Internet, et d'autre part à au moins un service propre audit opérateur.

L'invention concerne également un terminal selon la revendication 9.

L'invention concerne aussi un centre de gestion d'un opérateur de réseau selon la revendication 10.

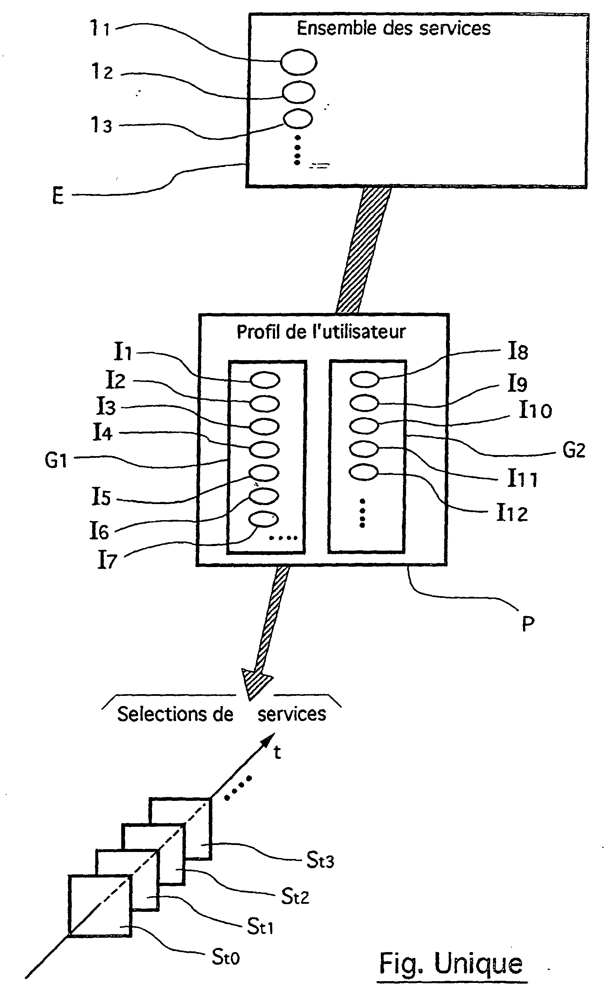

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels la figure unique illustre un exemple de mise à jour, selon un mode de réalisation préférentiel de l'invention, d'une sélection de services mise à disposition d'un utilisateur.

L'invention concerne donc un procédé de mise à disposition d'une sélection de services pour un utilisateur d'un terminal. Quelle que soit sa nature, le terminal est mis en oeuvre dans un réseau. Il s'agit par exemple d'un radiotéléphone mis en oeuvre au sein d'un réseau de radiocommunication cellulaire. On suppose que le terminal est du type comprenant des moyens de visualisation d'une sélection de services. Cette visualisation se fait par exemple sous la forme d'une liste. On suppose également que l'opérateur du réseau dispose d'un centre de gestion contrôlant une pluralité de terminaux et de typologies de clients, et proposant aux utilisateurs (ou abonnés) une pluralité de services adaptés à leurs besoins. En pratique, certains de ces services sont sous-traités à des offreurs de services tiers ayant passé un contrat avec l'opérateur.

La présente invention porte plus précisément sur la mise à jour de la sélection des services proposés à chacun des utilisateurs. On suppose donc, dans la suite de la description, que l'utilisateur s'est préalablement vu attribuer par l'opérateur une liste (ou sélection) prédéterminée de services dite sélection de services initiale. On choisit les services dont il peut bénéficier. Cette phase préalable, classique et connue en soi, consiste par exemple pour l'utilisateur à prendre auprès l'opérateur un abonnement particulier, associé à une sélection de services prédéterminée, ou qui peut évoluer au choix de l'opérateur ou de l'utilisateur, et sensé être le mieux adapté à ses besoins.

En résumé, et comme illustré sur la figure unique, l'opérateur dispose d'un ensemble E de services, et la sélection de services initiale Sₜ₀ de l'utilisateur comprend seulement certains de ces services. L'ensemble E de services comprend par exemple les services suivants :
- les informations de différentes places boursières ;
- les restaurants en vogue de l'endroit où ils se trouvent ;
- les journaux financiers ;
- les bornes de taxis les plus proches etc...

Par la suite, la sélection de services initiale Sₜ₀ doit être mise à jour. Selon la présente invention, cette mise à jour est effectuée par l'opérateur, en fonction d'un profil P de l'utilisateur. Dans l'exemple illustré, la sélection de services initiale Sₜ₀ est remplacée successivement, au cours du temps t, par différentes sélections de services référencées Sₜ₁, Sₜ₂, Sₜ₃, ...

Dans le mode de réalisation particulier de l'invention illustré sur la figure unique, le profil P de l'utilisateur comprend un premier groupe G1 d'informations liées au comportement courant et/ou passé de l'utilisateur et un second groupe G2 d'informations génériques.

Le premier groupe G1 d'informations comprend par exemple au moins certaines des informations suivantes :
- les services couramment utilisés I1 ;
- les derniers services utilisés I2 ;
- les sites "Internet" visités I3 ;
- la situation géographique courante I4 et/ou précédente I5 ;
- le pays actuel I6 et/ou les pays visités I7 ;
- ...

Le second groupe G2 d'informations comprend par exemple au moins certaines des informations suivantes :
- type d'abonnement I8 ;
- type d'usage (particulier, professionnel, ...) I9 ;
- âge I10, sexe I11, situation de famille I12 ;
- appartenance à un groupe social prédéterminé (les gastronomes, les voyageurs, les jeunes, les femmes, les seniors etc...) ;
- ...

Dans le cas où le terminal est un radiotéléphone, il est possible de télécharger les services sur le terminal, afin de permettre la mise à jour de la sélection de services. Différentes technologies de téléchargement peuvent être utilisées, telles que par exemple : la technologie "SMS", la technologie "WAP/HDML" et la technologie "SIM Application ToolKit", résumées ci-dessous.

La technologie "SMS" (pour "Short Message Service" en anglais), permet au centre de gestion de l'opérateur d'envoyer des messages courts vers le radiotéléphone, via un centre de messages courts compris dans le système de radiocommunication.

La technologie "WAP/HDML" (pour "Wireless Application Protocol / Handled Device Mark-up Language" en anglais) permet au centre de gestion de l'opérateur de communiquer avec le radiotéléphone, via un "site Web" d'un réseau informatique de type Internet. Le radiotéléphone est muni d'un navigateur ("browser") utilisant le langage spécifique "WAP/HDML". Pour plus de précisions concernant ce langage, et plus généralement les concepts WAP et HDML (marque déposée), on pourra se reporter aux documents cités ci-après . Concernant HDML, le document suivant est consultable sur l'URL "http://www.uplanet.com" : "HDML Spécification" (spécification HDML), version 2.0, 11 avril 1997. Concernant WAP, les documents suivants sont consultables sur l'URL "http://www.wapforum.org/" : "WAP Architecture Specification", WAP Forum, 30 avril 1998 ; Wireless Transport Layer Security Specification", WAP Forum, 30 avril 1998 ; WML Script Language Specification", WAP Forum, 9 avril 1998 ; WAP Security Smart Card", draft version 0.1 (1998-06).

La technologie "SIM Application ToolKit" est basée sur un jeu de commandes et de procédures décrits en détail dans la norme "GSM 11.14 (Phase 2+)" de l'ETSI. Elle permet à un module d'identification d'abonné (ou carte SIM) coopérant avec le radiotéléphone de "prendre la main" et de commander ce dernier. Ainsi, la carte SIM peut communiquer avec le centre de gestion de l'opérateur.

Ces techniques permettent de modifier à distance des informations dans le terminal, voire dans un module d'identification d'abonné avec lequel coopère le terminal. Cette modification peut être effectuée en temps réel et de façon complètement transparente pour l'utilisateur.

On décrit maintenant, simplement à titre d'exemple, une utilisation possible de l'une des informations du premier groupe G1, à savoir la situation géographique courante de l'utilisateur I4. On suppose dans cet exemple qu'il existe plusieurs services de réservation d'hôtels 1₁, 1₂, 1₃, ..., liés chacun à une région donnée (par exemple un département). On suppose également que la sélection de services initiale Sₜ₀ comprend le service de réservation d'hôtels lié au département où est domicilié l'utilisateur. Si l'utilisateur se déplace et change de département, l'opérateur en est informé (par exemple grâce aux données de localisation cellulaire contenues dans les données de signalisation) et met alors à jour automatiquement la sélection de services de cet utilisateur, en remplaçant le précédent service de réservation d'hôtels par celui lié au département dans lequel vient d'arriver l'utilisateur.

Il est clair que de nombreuses informations distinctes peuvent être utilisées, seules ou en combinaison, pour former le profil de l'utilisateur en fonction duquel est effectuée la mise à jour. Par conséquent, de très nombreuses variantes de réalisation peuvent être envisagées, sans sortir du cadre de la présente invention.

Optionnellement, on peut élargir l'utilisation des informations "comportementales" au fonctionnement du terminal. On peut en effet tenir compte également d'au moins une information représentative du comportement de l'utilisateur pour au moins une des opérations suivantes :
- présentation des services ;
- hiérarchisation des services ;
- configuration du terminal ;

On notera par ailleurs que certains des services compris dans la sélection de services, s'ils sont du type offrant une prestation fonction de la localisation, peuvent avantageusement être mis en oeuvre selon la technique décrite dans la demande de brevet française n° 93 12050, déposée le 5 octobre 1993 au nom de la Compagnie Financière pour le Radiotéléphone (COFIRA), et dont M. Jean-Gabriel REMY est l'inventeur. Cette technique s'applique dans le cadre d'un système de radiocommunication cellulaire. Elle consiste, lorsque le radiotéléphone appelle des moyens permettant de fournir un service (par exemple un serveur), à extraire des données de signalisation une information de localisation existante (mais prévue à l'origine uniquement à des fins d'établissement de l'appel). Une fois extraite, cette information de localisation est transmise au serveur qui l'utilise comme paramètre d'interrogation, de façon que le service fourni soit effectivement personnalisé en fonction de la position géographique de l'utilisateur. Ainsi, l'utilisateur n'a aucune information de localisation à fournir. Il est clair que le document de brevet précité ne prévoit nullement, en fonction du comportement de l'utilisateur, d'inclure ou non dans la sélection de services de cet utilisateur les différents services offrant une prestation fonction de la localisation. Pour cette raison, cette technique est complémentaire et non concurrente de celle proposée par la présente invention.

## Revendications

1. Procédé pour la mise à disposition d'une sélection de services (Sₜᵢ) pour un utilisateur d'un terminal, **caractérisé en ce que** ladite sélection de services est automatiquement et dynamiquement mise à jour par l'opérateur du réseau mettant en oeuvre ledit terminal, de façon complètement transparente pour l'utilisateur et en temps réel, en fonction d'au moins une information (I1 à I7) représentative du comportement dudit utilisateur, la sélection de services se présentant selon une liste de services évolutive correspondant aux besoins connus et/ou supposés de l'utilisateur, ladite sélection de services étant mise à jour en utilisant une technologie de téléchargement appartenant au groupe comprenant :
- la technologie "WAP/HDML" ;
- la technologie "SMS" ;
- la technologie "SIM Application ToolKit",
de telle manière que l'opérateur du réseau, grâce à ladite technologie de téléchargement puisse, à distance dans le terminal, modifier la sélection de services en temps réel et sans intervention de l'utilisateur.

2. Procédé de mise à disposition d'une sélection de services selon la revendication 1, **caractérisé en ce que** lesdites informations (I1 à I7) représentatives du comportement comprennent au moins une information (I4, I5) correspondant à une localisation géographique dudit utilisateur.

3. Procédé de mise à disposition d'une sélection de services selon l'une quelconque des revendications 1 et 2, **caractérisé en ce que** lesdites informations représentatives du comportement appartiennent au groupe comprenant :
- les services couramment utilisés (I1) ;
- les derniers services utilisés (I2) ;
- les sites "Internet" visités (I3) ;
- la situation géographique courante (I4) et/ou précédente (I5) ;
- le pays actuel (I6) et/ou les pays visités (I7).

4. Procédé de mise à disposition d'une sélection de services selon l'une quelconque des revendications 1 à 3, **caractérisé en ce qu'**on tient compte également d'au moins une des informations appartenant au groupe comprenant :
- type d'abonnement (I8) ;
- type d'usage (particulier, professionnel,...) (I9) ;
- âge (I10), sexe (I11), et/ou situation de famille (I12) ;
- appartenance à un groupe social prédéterminé.

5. Procédé de mise à disposition d'une sélection de services selon l'une quelconque des revendications 1 à 4, **caractérisé en ce que** ledit terminal permet l'accès d'une part à des services de type Internet, et d'autre part à au moins un service propre audit opérateur.

6. Procédé de mise à disposition d'une sélection de services selon l'une quelconque des revendications 1 à 5, **caractérisé en ce qu'**on tient compte également d'au moins une information représentative du comportement dudit utilisateur pour au moins une des opérations suivantes :
- présentation desdits services ;
- hiérarchisation desdits services ;
- configuration dudit terminal.

7. Procédé de mise à disposition d'une sélection de services selon l'une quelconque des revendications 1 à 6, **caractérisé en ce qu'**au moins certains desdits services appartiennent au groupe comprenant :
- les informations de différentes places boursières ;
- les restaurants en vogue de l'endroit où ils se trouvent ;
- les journaux financiers ;
- les bornes de taxis les plus proches etc...

8. Procédé de mise à disposition d'une sélection de services selon l'une quelconque des revendications 1 à 7, **caractérisé en ce que** ledit terminal est un terminal téléphonique ou radiotéléphonique.

9. Terminal comprenant des moyens de visualisation d'une sélection de services accessibles à l'utilisateur, mis à disposition par un opérateur de réseau centralisé,
**caractérisé en ce que** ladite sélection de services est automatiquement et dynamiquement mise à jour par ledit opérateur, de façon complètement transparente pour l'utilisateur et en temps réel, en fonction d'au moins une information (I1 à I7) représentative du comportement dudit utilisateur, la sélection de services se présentant selon une liste de services évolutive correspondant aux besoins connus et/ou supposés de l'utilisateur, ladite sélection de services étant mise à jour en utilisant une technologie de téléchargement appartenant au groupe comprenant :
- la technologie "WAP/HDML" ;
- la technologie "SMS" ;
- la technologie "SIM Application ToolKit",
de telle manière que l'opérateur du réseau, grâce à ladite technologie de téléchargement puisse, à distance dans le terminal, modifier la sélection de services en temps réel et sans intervention de l'utilisateur.

10. Centre de gestion d'un opérateur de réseau contrôlant une pluralité de terminaux, et mettant à disposition des utilisateurs desdits terminaux une sélection de services,
**caractérisé en ce qu'**il comprend des moyens de gestion et de mise à jour de façon automatique et dynamique, et de façon complètement transparente pour l'utilisateur et en temps réel, en fonction d'au moins une information (I1 à I7) représentative du comportement dudit utilisateur, la sélection de services se présentant selon une liste de services évolutive correspondant aux besoins connus et/ou supposés de l'utilisateur, ladite sélection de services étant mise à jour en utilisant une technologie de téléchargement appartenant au groupe comprenant :
- la technologie "WAP/HDML" ;
- la technologie "SMS" ;
- la technologie "SIM Application ToolKit",
de telle manière que l'opérateur du réseau, grâce à ladite technologie de téléchargement puisse, à distance dans le terminal, modifier la sélection de services en temps réel et sans intervention de l'utilisateur.

## Patentansprüche

1. Verfahren zum Bereitstellen einer Diensteselektion (Sₜᵢ) für einen Benutzer eines Endgerätes, **dadurch gekennzeichnet**, das diese Diensteselektion automatisch und dynamisch vom Betreiber des das Endgerät einsetzenden Netzes aktualisiert wird, in für den Benutzer vollkommen transparenter Weise und in Realzeit, als Funktion von mindestens einer für das Verhalten des besagten Benutzers repräsentativen Information (I1 bis I7), wobei die Diensteselektion nach einer sich entwickelnden Liste von Dienstleistungen erfolgt, welche den bekannten und/oder vermuteten Bedürfnissen des Benutzers entspricht, wobei diese Diensteselektionen durch Verwendung einer Technologie zum Herunterladen aktualisiert wird, die der folgendes umfassenden Gruppe angehört:
- die "WAP/HDML"-Technologie;
- die "SMS"-Technologie;
- die "SIM Application Tool Kit"-Technologie,
so dass der Netzbetreiber, dank dieser Technologie zum Herunterladen, in der Lage ist, die Diensteselektion in Realzeit und ohne Zutun des Benutzers aus der Ferne im Endgerät zu ändern.

2. Verfahren zum Bereitstellen einer Diensteselektion nach Anspruch 1, **dadurch gekennzeichnet, dass** die für das Verhalten repräsentativen Informationen (I1 bis I7) mindestens eine Information (I4, I5) umfassen, die einer geographischen Position des Benutzers entspricht.

3. Verfahren zum Bereitstellen einer Diensteselektion nach einem der Ansprüche 1 oder 2, **dadurch gekennzeichnet, dass** die für das Verhalten repräsentativen Informationen der folgendes umfassenden Gruppen angehören:
- die derzeit verwendeten Dienstleistungen (I1);
- die zuletzt verwendeten Dienstleistungen (12);
- die besuchten Internetseiten (I3);
- die laufende (I4) und/oder die vorherige (I5) geographische Position;
- das aktuelle Land (I6) und/oder die besuchten Länder (I7).

4. Verfahren zum Bereitstellen einer Diensteselektion nach einem der Ansprüche 1 bis 3, **dadurch gekennzeichnet, dass** ebenfalls mindestens eine der Informationen aus der folgendes umfassenden Gruppe berücksichtigt wird:
- Art der Mitgliedschaft (I8);
- Art der Verwendung (privat, beruflich usw.) (I9);
- Alter (I10), Geschlecht (I11) und/oder Familienstand (I12);
- Zugehörigkeit zu einer bestimmten sozialen Gruppe.

5. Verfahren zum Bereitstellen einer Diensteselektion nach einem der Ansprüche 1 bis 4, **dadurch gekennzeichnet, dass** das Endgerät einerseits den Zugang zu Dienstleistungen des Typs Internet und andererseits den Zugang zu einer dem Betreiber eigenen Dienstleistung ermöglicht.

6. Verfahren zum Bereitstellen einer Diensteselektion nach einem der Ansprüche 1 bis 5, **dadurch gekennzeichnet, dass** ebenfalls mindestens eine für das Verhalten des Benutzers repräsentative Information für mindestens eine der folgenden Operationen berücksichtigt wird:
- Vorstellung der Dienstleistungen;
- Hierarchisierung dieser Dienstleistungen;
- Konfiguration des Endgeräts.

7. Verfahren zum Bereitstellen einer Diensteselektion nach einem der Ansprüche 1 bis 6, **dadurch gekennzeichnet, dass** mindestens einige der Dienstleistungen der folgendes umfassenden Gruppe angehören:
- die von verschiedenen Börsen gesendeten Nachrichten;
- die am Aufenthaltsort am meisten besuchten Restaurants;
- die Finanzpresse;
- die nächstgelegenen Taxistationen usw.

8. Verfahren zum Bereitstellen einer Diensteselektion nach einem der Ansprüche 1 bis 7, **dadurch gekennzeichnet, dass** das Endgerät ein Telefon- oder Funktelefonterminal ist.

9. Endgerät, das Mittel zum Anzeigen einer Auswahl von für den Benutzer zugänglichen Dienstleistungen aufweist, die von einem Betreiber eines zentralisierten Netzes zur Verfügung gestellt werden,
**dadurch gekennzeichnet, dass** diese Diensteselektion automatisch und dynamisch von diesem Betreiber aktualisiert wird, in einer Weise, die für den Benutzer vollkommen transparent ist, und in Realzeit als Funktion von mindestens einer für das Verhalten des besagten Benutzers repräsentativen Information (I1 bis I7), wobei die Diensteselektion nach einer sich entwickelnden Liste von Dienstleistungen erfolgt, welche den bekannten und/oder vermuteten Bedürfnissen des Benutzers entspricht, wobei diese Diensteselektionen durch Verwendung einer Technologie zum Herunterladen aktualisiert wird, die der folgendes umfassenden Gruppe angehört:
- die "AP/HDML"-Technologie;
- die "SMS"-Technologie;
- die "SIM Application Tool Kit"-Technologie, so dass der Netzbetreiber, dank dieser Technologie zum Herunterladen in der Lage ist, die Diensteselektion in Realzeit und ohne Zutun des Benutzers aus der Ferne im Endgerät zu ändern.

10. Verwaltungszentrum eines Netzbetreibers, das eine Vielzahl von Endgeräten kontrolliert und den Benutzern dieser Endgeräte eine Diensteselektion zur Verfügung stellt,
**dadurch gekennzeichnet, dass** es über Mittel zum Verwalten und zum automatischen und dynamischen Aktualisieren verfügt, in einer Weise, die für den Benutzer vollkommen transparent ist, und in Realzeit als Funktion von mindestens einer für das Verhalten des besagten Benutzers repräsentativen Information (I1 bis I7), wobei die Diensteselektion nach einer sich entwickelnden Liste von Dienstleistungen erfolgt, welche den bekannten und/oder vermuteten Bedürfnissen des Benutzers entspricht, wobei diese Diensteselektionen durch Verwendung einer Technologie zum Herunterladen aktualisiert wird, die der folgendes umfassenden Gruppe angehört:
- die "WAP/HDML"-Technologie;
- die "SMS"-Technologie;
- die "SIM Application Tool Kit"-Technologie,
so dass der Netzbetreiber, dank dieser Technologie zum Herunterladen in der Lage ist, die Diensteselektion in Realzeit und ohne Zutun des Benutzers aus der Ferne im Endgerät zu ändern.

## Claims

1. Method for providing a selection of services (Sₜᵢ) for a user of a terminal, **characterized in that** the said selection of services is automatically and dynamically updated by the network operator making use of the said terminal, in a completely transparent way for the user and in real time, as a function of at least one data element (I1 to I7) representing the behaviour of the said user, the selection of services being presented in the form of a updatable list of services corresponding to the known and/or assumed requirements of the user, the said selection of services being updated by means of a remote loading technology belonging to the group comprising:
- WAP/HDML technology;
- SMS technology;
- SIM Application ToolKit technology,
in such a way that, by means of the said remote loading technology, the network operator, working remotely at the terminal, can modify the selection of services in real time and without the intervention of the user.

2. Method for providing a selection of services according to Claim 1, **characterized in that** the said data elements (I1 to I7) representing the behaviour comprise at least one data element (I4, I5) corresponding to a geographical location of the said user.

3. Method for providing a selection of services according to either one of Claims 1 and 2, **characterized in that** the said data elements representing the behaviour belong to the group comprising:
- the services currently used (I1);
- the last services used (I2);
- the Internet sites visited (I3);
- the present geographical location (I4) and/or the preceding geographical location (I5);
- the present country (I6) and/or the countries visited (I7).

4. Method for providing a selection of services according to any one of Claims 1 to 3, **characterized in that** at least one of the data elements belonging to the following group is also taken into account:
- type of subscription (I8);
- type of use (private, professional, etc.) (I9);
- age (I10), sex (I11) and/or family status (I12);
- membership of a predetermined social group.

5. Method for providing a selection of services according to any one of Claims 1 to 4, **characterized in that** the said terminal allows access on the one hand to services of the Internet type and on the other hand to a service provided by the said operator.

6. Method for providing a selection of services according to any one of Claims 1 to 5, **characterized in that** at least one data element representing the behaviour of the said user is also taken into account for at least one of the following operations:
- presentation of the said services;
- hierarchical ranking of the said services;
- configuration of the said terminal.

7. Method for providing a selection of services according to any one of Claims 1 to 6, **characterized in that** at least some of the said services belong to the group comprising:
- information on various stock markets;
- popular restaurants in their location;
- the financial press;
- the nearest taxi ranks, etc.

8. Method for providing a selection of services according to any one of Claims 1 to 7, **characterized in that** the said terminal is a telephone or mobile telephone terminal.

9. Terminal comprising means of displaying a selection of services accessible to the user, provided by a centralized network operator, **characterized in that** the said selection of services is automatically and dynamically updated by the network operator exploiting the said terminal, in a completely transparent way for the user and in real time, as a function of at least one data element (I1 to I7) representing the behaviour of the said user, the selection of services being presented in the form of a updatable list of services corresponding to the known and/or assumed requirements of the user, the said selection of services being updated by means of a remote loading technology belonging to the group comprising:
- WAP/HDML technology;
- SMS technology;
- SIM Application ToolKit technology,
in such a way that, by means of the said remote loading technology, the network operator, working remotely at the terminal, can modify the selection of services in real time and without the intervention of the user.

10. Management centre of a network operator controlling a plurality of terminals, and providing a selection of services to the users of the said terminals, **characterized in that** it comprises means for managing and updating in an automatic and dynamic way, and in a completely transparent way for the user and in real time, as a function of at least one data element (I1 to I7) representing the behaviour of the said user, the selection of services being presented in the form of a updatable list of services corresponding to the known and/or assumed requirements of the user, the said selection of services being updated by means of a remote loading technology belonging to the group comprising:
- WAP/HDML technology;
- SMS technology;
- SIM Application ToolKit technology,
in such a way that, by means of the said remote loading technology, the network operator, working remotely at the terminal, can modify the selection of services in real time and without the intervention of the user.
